# EUROPEAN PATENT SPECIFICATION

(11) **EP 3 915 753 B1**
(45) Date of publication and mention of the grant of the patent: **24.09.2025**
(21) Application number: 21175952.7
(22) Date of filing: 26.05.2021
(51) Int. Cl.: B29C 45/27, B29C 39/10, B29C 39/26, B29C 33/30, B29C 45/14, H02K 15/02, H02K 15/03, H02K 1/27, H02K 15/12, B29C 45/02, B29C 45/00, B29C 45/26, B29C 39/24, B29C 39/38

(54) **ROTOR MANUFACTURING APPARATUS**
ROTORHERSTELLUNGSVORRICHTUNG
APPAREIL DE FABRICATION DE ROTOR

(30) Priority: 28.05.2020 JP 2020093697
(43) Date of publication of application: 01.12.2021
(73) Proprietor: Nidec Corporation, Kyoto-shi, Kyoto 601-8205 (JP)
(72) Inventor: TAKENAKA, Akira, Kyoto 601-8205 (JP); IWATA, Koichi, Kyoto 601-8205 (JP); TSUJI, Hideki, Kyoto 601-8205 (JP); TANAKA, Yosuke, Kyoto 601-8205 (JP)
(74) Representative: Viering, Jentschura & Partner mbB Patent- und Rechtsanwälte

(56) References cited:
- JP-A- 2006 211 865
- JP-A- 2013 240 202
- JP-A- 2015 126 671
- JP-A- 2017 055 513
- JP-A- 2017 085 872
- JP-A1- WO2015 053 368
- JP-B2- 6 424 193
- US-A1- 2016 352 198

## Description

### Technical Field

The present invention relates to a rotor manufacturing apparatus.

### Background Art

There has been known an apparatus for manufacturing a rotor including a laminated body having a magnet insertion hole, and a permanent magnet fixed in the magnet insertion hole with a resin. For example, Patent Literature 1 discloses, as an apparatus for manufacturing a laminated iron core, a resin filling apparatus including a pair of sandwiching members and a filling machine.

In the resin filling apparatus disclosed in Patent Literature 1, the sandwiching members are quadrangular flat plates arranged above and below. The upper one of the sandwiching members includes a plurality of resin flow paths penetrating therethrough in a thickness direction. The filling machine includes a plurality of plungers and a drive mechanism. The plungers are respectively located in the resin flow paths, and are movable in the resin flow paths. The drive mechanism is, for example, an air cylinder that moves each of the plungers in the thickness direction of the sandwiching members, based on a command from a controller.

In filling magnet insertion holes in a laminated body with a resin, using the resin filling apparatus disclosed in Patent Literature 1, first, the laminated body is pressurized in such a manner that the laminated body is sandwiched between the sandwiching members. In this pressurized state, the magnet insertion holes are filled with the resin. Specifically, a resin pellet is charged into the resin flow paths, and then the plungers are respectively inserted into the resin flow paths. Thereafter, the controller drives a heater and the drive mechanism to melt the resin pellet, and the plungers supply the molten resin into the magnet insertion holes through the resin flow paths. The resin in each magnet insertion hole is solidified, so that permanent magnets are fixed in the magnet insertion holes with the resin. Patent Literature 2 discloses a method of manufacturing a laminated core including using a dummy plate in a resin-sealing process, in which the dummy plate can be easily detached and resin injected in magnet insertion holes can be prevented from being hollowed.

### Citation List

### Patent Literature

Patent Literature 1: JP 2018-82539 APatent Literature 2: US 2016/352198 A1

### Summary of Invention

### Technical Problem

According to the resin filling apparatus disclosed in Patent Literature **1,** each of the resin flow paths penetrates through an upper one of the sandwiching members in a thickness direction. According to this configuration, in a case where inner peripheral faces of the resin flow paths are partially damaged or in a case where the resin flow paths are clogged with the resin, it is necessary to replace the sandwiching member including the resin flow paths with a new one. More specifically, it is impossible to replace only a damaged portion of the sandwiching member or to replace only a portion, which is clogged with the resin, of the sandwiching member. Hence, the use of the resin filling apparatus disclosed in Patent Literature 1 results in increase in manufacturing cost for the laminated body.

An object of the present invention is to provide a rotor manufacturing apparatus capable of reducing manufacturing cost for a rotor including a magnet fixed with a resin.

### Solution to Problem

An embodiment of the present invention provides a rotor manufacturing apparatus for manufacturing a rotor including a rotor main body having a cylindrical shape and having a shaft hole accommodating a shaft and an accommodation hole accommodating a magnet, and the magnet accommodated in the accommodation hole and fixed in the accommodation hole with a resin. The rotor manufacturing apparatus includes: a first mold including a resin receive space portion receiving the resin to be supplied into the accommodation hole, and a flow path through which the molten resin flows into the accommodation hole; and a second mold configured to sandwich the rotor main body mounted thereabove, in conjunction with the first mold. The flow path includes: a flow path main body communicating at its upstream side with the resin receive space portion; and a resin outlet located downstream of the flow path main body. The first mold includes: a first mold main body including the resin receive space portion; a runner plate having a flat plate shape and including the flow path main body, the runner plate being detachable from the first mold main body; and a plurality of gate plates each having a flat plate shape and each having a through-hole, the gate plates being detachable from the first mold main body. The gate plates are located opposite the first mold main body in a thickness direction of the runner plate with the runner plate interposed between the gate plates and the first mold main body in a state in which the gate plates are stacked on top one another in the thickness direction. The resin outlet includes the through-holes in the gate plates, the through-holes communicating with one another in the state in which the gate plates are stacked on top one another in the thickness direction.

### Advantageous Effects of Invention

A rotor manufacturing apparatus according to an embodiment of the present invention is capable of reducing manufacturing cost for a rotor including a magnet fixed with a resin.

### Brief Description of Drawings

FIG. 1 is a sectional view of a schematic configuration of a rotor manufacturing apparatus according to an embodiment.
FIG. 2 is a partially enlarged sectional view of FIG. 1.
FIG. 3 is a bottom view of a part of a first mold and a rotor main body.
FIG. 4 is a perspective view of a part of the first mold and the rotor main body.
FIG. 5 is a plan view of a plate and the rotor main body.
FIG. 6 is a perspective view of the plate and the rotor main body.

### Description of Embodiments

An embodiment of the present invention will be described in detail below with reference to the drawings. In the respective drawings, identical or corresponding portions are denoted with identical reference signs; therefore, the description thereof will not be given repeatedly. In addition, the respective drawings do not faithfully illustrate the dimensions of actual constituent members, dimensional ratios of the constituent members, and the like.

In the following description on a rotor manufacturing apparatus 1, the term "axis direction", "axial", or "axially" refers to a direction parallel with an axis of a rotor main body 21, the term "radial direction", "radial", or "radially" refers to a direction orthogonal to the axis, and the term "circumferential direction", "circumferential", or "circumferentially" refers to a direction along an arc about the axis. Also in the following description, the term "up and down direction" refers to a vertical direction in a state in which the rotor manufacturing apparatus 1 is installed. It should be noted, however, that the directional definitions do not intend to limit the orientation of the rotor manufacturing apparatus 1 in putting the rotor manufacturing apparatus 1 to use.

Also in the following description, the verbal definitions "fix", "connect", "join", "mount", and others involve not only a case where two members are, for example, directly fixed to each other, but also a case where two members are, for example, fixed to each other with another member interposed therebetween. In the following description, the verbal definitions such as "fix" involve a state of, for example, direct fixation between two members and a state of, for example, indirect fixation between two members.

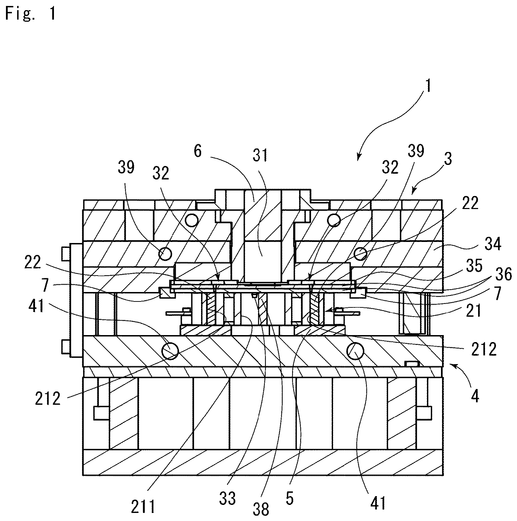

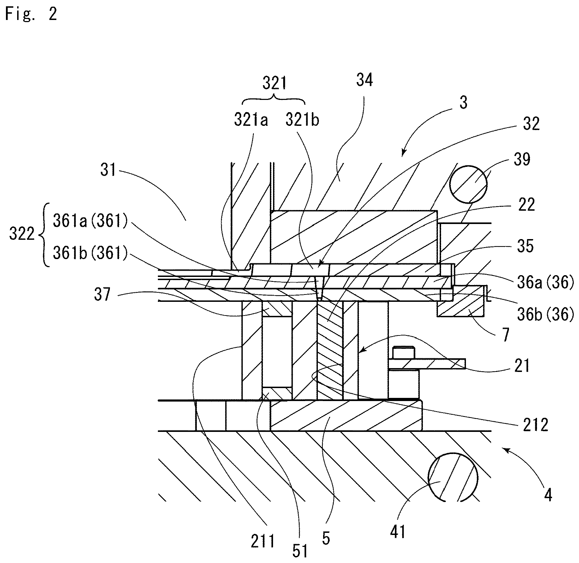

FIG. 1 is a sectional view of a schematic configuration of a rotor manufacturing apparatus 1 according to an embodiment of the present invention. FIG. 2 is a partially enlarged sectional view of FIG. 1. The rotor manufacturing apparatus 1 is an apparatus for manufacturing a rotor including a rotor main body 21 and a magnet 22. The rotor manufacturing apparatus 1 includes a first mold 3, a second mold 4, and a plate 5. In the present embodiment, the first mold 3 is located above the second mold 4, and the second mold 4 is located below the first mold 3.

A first mold drive mechanism (not illustrated) moves the first mold 3 upward and downward relative to the second mold 4. The rotor main body 21 is sandwiched between the first mold 3 and the second mold 4. At this time, the rotor main body 21 is mounted on the plate 5 located on the second mold 4.

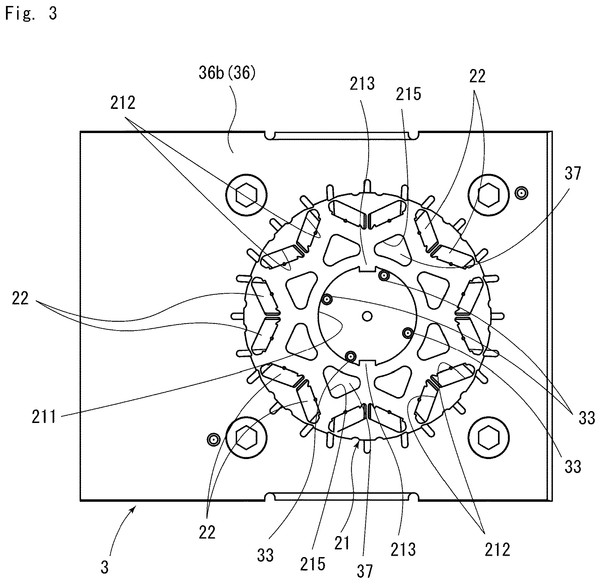

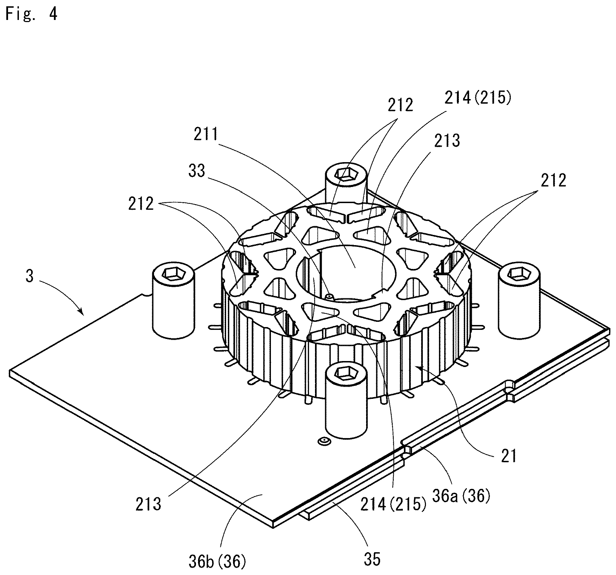

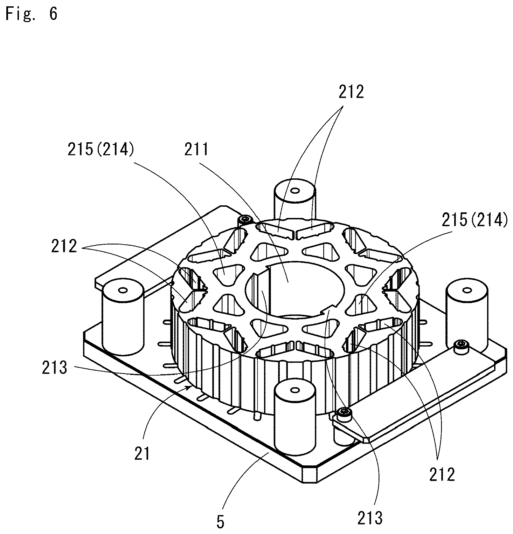

As illustrated in FIGS. 3 to 6, the rotor main body 21 has a shaft hole 211 accommodating a shaft, and an accommodation hole 212 accommodating the magnet 22. It should be noted that FIGS. 4 and 6 do not illustrate the magnet 22.

In the present embodiment, the shaft hole 211 in the rotor main body 21 is a through-hole including the axis of the rotor main body 21. In other words, the rotor main body 21 has a cylindrical shape and extends axially. The rotor main body 21 includes a projection 213 protruding radially inward from an inner peripheral face of the shaft hole 211. The projection 213 extends along the axial direction of the shaft hole 211, on the inner peripheral face of the shaft hole 211.

In the present embodiment, the rotor main body 21 includes two projections 213. The projections 213 are located opposite each other in the radial direction of the shaft hole 211, on the inner peripheral face of the shaft hole 211. In the rotor main body 21, the number of projections may be not less than three.

In the present embodiment, the rotor main body 21 has a plurality of accommodation holes 212 provided in a pair. The accommodation holes 212 are arranged around the shaft hole 211 in the circumferential direction of the rotor main body 21. The accommodation holes 212 axially penetrate through the rotor main body 21.

Each of the accommodation holes 212 accommodates therein a magnet 22. As will be described later, each magnet 22 is fixed in the corresponding accommodation hole 212 with a resin which the rotor manufacturing apparatus 1 supplies into the accommodation holes 212.

As illustrated in FIGS. 1 and 2, the first mold 3 includes a resin receive space portion 31, a flow path 32, and a contact portion 33.

The resin receive space portion 31 is a space receiving the resin to be supplied into an accommodation hole 212. The resin receive space portion 31 is located at the center of the first mold **3.** A plunger 6 is disposed in the resin receive space portion 31, and is movable up and down in the resin receive space portion 31. A plunger drive mechanism (not illustrated) moves the plunger 6 upward and downward.

The flow path 32 is a flow path through which the molten resin flows into the accommodation holes 212. The flow path 32 includes a flow path main body 321 and a resin outlet 322. The flow path main body 321 communicates at its upstream side with the resin receive space portion 31. The resin outlet 322 is located downstream of the flow path main body 321.

In the present embodiment, the first mold 3 includes a plurality of the flow paths 32 through which the resin is supplied into the accommodation holes 212. In the flow paths 32, the flow path main bodies 321 communicate at their upstream sides with the resin receive space portion 31. Also in the flow paths 32, the resin outlets 322 communicate at their upstream sides with downstream sides of the flow path main bodies 321, respectively. Also in the flow paths 32, the resin outlets 322 are opened at the lower face of the first mold 3.

The contact portion 33 is inserted in the shaft hole 211 in the rotor main body 21, and is in contact with the inner peripheral face of the shaft hole 211. In the present embodiment, the first mold 3 includes four contact portions 33. Each of the contact portions 33 has a pin shape and protrudes downward from the lower face of the first mold 3. In the first mold 3, the number of contact portions may be not more than three or may be not less than five.

Preferably, the contact portions 33 are detachable from the first mold 3. In this case, for example, the contact portions 33 are attached to the lower face of the first mold 3 with screws.

The first mold 3 includes a first mold main body 34, a runner plate 35, and a gate plate 36. The first mold main body 34 includes the resin receive space portion 31. Each of the runner plate 35 and the gate plate 36 has a substantially quadrangular flat plate shape as seen in plan view.

The runner plate 35 includes the flow path main body 321. In the present embodiment, a through-hole in the runner plate 35 forms the flow path main body 321. Specifically, the through-hole is defined by a circular portion 321a having a circular shape as seen in plan view, and a plurality of extending portions 321b extending radially from the circular portion 321a. The circular portion 321a corresponds to an upstream portion of the flow path main body 321. The circular portion 321a communicates with the resin receive space portion 31. Each of the extending portions 321b corresponds to a downstream portion of the flow path main body 321. The extending portions 321b communicate with the circular portion 321a. The extending portions 321b also communicate with the resin outlets 322.

The gate plate 36 has a through-hole 361. In the present embodiment, the first mold 3 includes two gate plates 36. Specifically, the first mold 3 includes a first gate plate 36a located nearer to the first mold main body 34 and a second gate plate 36b located nearer to the accommodation holes 212.

In a state in which the first gate plate 36a and the second gate plate 36b are stacked on top of each other in the thickness direction, the first gate plate 36a and the second gate plate 36b are located opposite the first mold main body 34 in the thickness direction of the runner plate 35 with the runner plate 35 interposed between each of the first gate plate 36a and the second gate plate 36b and the first mold main body 34. A through-hole 361a in the first gate plate 36a communicates with a through-hole 361b in the second gate plate 36b. The through-holes 361a and 361b communicate with each other to form the resin outlets 322.

In the present embodiment, the through-hole 361a in the first gate plate 36a is different in shape from the through-hole 361b in the second gate plate 36b. A diameter of the through-hole 361b in the second gate plate 36b nearer to the accommodation holes 212 is smaller than a diameter of the through-hole 361a in the first gate plate 36a nearer to the first mold main body 34. Specifically, the through-hole 361a in the first gate plate 36a and the through-hole 361b in the second gate plate 36b are tapered holes that are different in diameter from each other. The two through-holes 361a and 361b, which are tapered holes different in diameter from each other, are tapered holes whose outer diameters nearer to the accommodation holes 212 are smaller than outer diameters nearer to the first mold main body 34.

The runner plate 35 and the first gate plate 36a are stacked on top of each other in the thickness direction. Therefore, the through-hole forming the flow path main body 321 of the runner plate 35 has an opening nearer to the accommodation holes 212, the opening being covered with the first gate plate 36a. The flow path main body 321 thus has a groove shape opened toward the first mold main body 34. In the state in which the runner plate 35 and the first gate plate 36a are stacked on top of each other, the position of the extending portions 321b of the runner plate 35 and the position of the through-hole 361a in the first gate plate 36a overlap each other as seen from the axial direction. The extending portions 321b of the runner plate 35 accordingly communicate with the through-hole 361a in the first gate plate 36a. As described above, the first mold 3 includes the plurality of flow paths 32.

The first mold 3 may include a plurality of the runner plates 35. In this case, the runner plates 35 are stacked on top of one another in the thickness direction.

As illustrated in FIGS. 1 and 2, the first mold main body 34 includes guide rails 7 holding the runner plates 35 and the gate plates 36. The guide rails 7 are located opposite each other in the radial direction of the rotor main body 21, and are disposed on a lower end of the first mold main body 34. The radially opposed guide rails 7 hold the runner plates 35 and gate plates 36 stacked on top of one another, in such a manner that both ends of the runner plates 35 and gate plates 36 are mounted on the guide rails 7. The guide rails 7 thus hold the runner plates 35 and the gate plates 36 such that the runner plates 35 and the gate plates 36 are movable in a direction orthogonal to the thickness direction in the state in which the runner plates 35 and the gate plates 36 are stacked on top of one another in the thickness direction. The runner plates 35 and the gate plates 36 are therefore removable from the first mold main body 34. Preferably, the guide rails 7 are detachable from the first mold main body 34. In this case, for example, the guide rails 7 are attached to the lower end of the first mold main body 34 with screws.

The second mold 4 is configured to sandwich the rotor main body 21 in conjunction with the first mold 3. Therefore, the rotor main body 21 is mounted above an upper face of the second mold 4 with the plate 5 interposed between the rotor main body 21 and the second mold 4 as described above.

The plate 5 has a substantially quadrangular plate shape as seen in plan view. The plate 5 includes a first protrusion 51 protruding from its upper face in the thickness direction. In the present embodiment, the plate 5 includes two first protrusions 51. The first protrusions 51 protrude upward from the upper face of the plate 5. The rotor main body 21 includes a first insertion portion 214 in which a first protrusion 51 of the plate 5 is inserted. In the present embodiment, the plate 5 includes the plurality of first protrusions 51, and the rotor main body 21 includes a plurality of the first insertion portions 214 in accordance with the number of first protrusions 51. Each of the first insertion portions 214 is a hole opened at a lower face of the rotor main body 21. Each of the first insertion portions 214 has a substantially triangular shape as seen in bottom view. In the plate 5, the number of first protrusions may be not less than three. In this case, the rotor main body 21 includes three or more first insertion portions.

The first mold 3 includes a second protrusion 37. In the present embodiment, the first mold 3 includes two second protrusions 37. The second protrusions 37 protrude downward from the lower face of the first mold 3.

The first mold 3 also includes a pillar portion 38 inserted in the shaft hole 211 in the rotor main body 21. The pillar portion 38 has a pillar shape and protrudes downward from the lower face of the first mold 3. The rotor main body 21 includes a second insertion portion 215 in which a second protrusion 37 of the first mold 3 is inserted. In the present embodiment, the first mold 3 includes the plurality of second protrusions 37, and the rotor main body 21 includes a plurality of the second insertion portions 215 in accordance with the number of second protrusions 37. Each of the second insertion portions 215 is a hole opened at an upper face of the rotor main body 21. Each of the second insertion portions 215 has a substantially triangular shape as seen in plan view.

In the present embodiment, the first insertion portions 214 located below the rotor main body 21 communicate with the second insertion portions 215 located above the rotor main body 21. In other words, the rotor main body 21 has a plurality of through-holes forming the first insertion portions 214 and the second insertion portions 215. The first protrusions 51 of the plate 5 are inserted in axially first openings of the through-holes. The second protrusions 37 of the first mold 3 are inserted in axially second openings of the through-holes.

The first mold 3 includes a heater 39 as a heat source. The second mold 4 includes a heater 41 as a heat source. The heater 39 of the first mold 3 is located near the resin receive space portion 31 in the first mold 3. The heater 41 of the second mold 4 is located at an upper end in the second mold 4. The heater 39 heats the resin in the resin receive space portion 31. The heater 41 heats the rotor main body 21.

Next, a description will be given of an operation of the rotor manufacturing apparatus 1 according to the present embodiment. Before the rotor manufacturing apparatus 1 starts to operate, first, the plate 5 on which the rotor main body 21 is mounted is placed on the upper face of the second mold **4.** At this time, the first protrusions 51 of the plate 5 are inserted into the first insertion portions 214 in the rotor main body 21. The rotor main body 21 is thus positioned with respect to the plate 5, that is, the second mold 4.

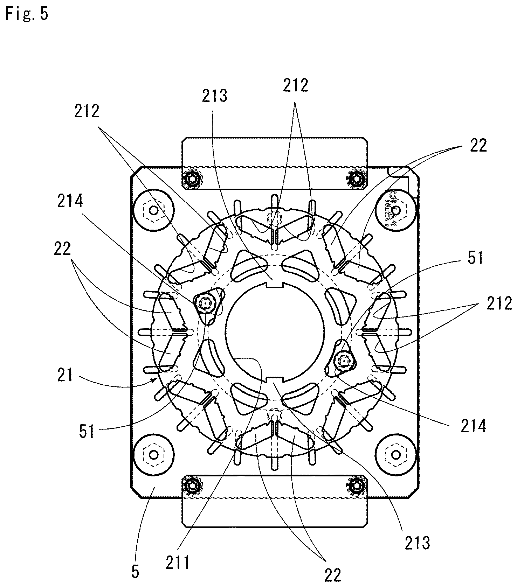

As illustrated in FIG. 5, the two first protrusions 51 are located opposite each other on the plate 5 in the radial direction of the rotor main body 21. This configuration therefore enables regulation of axial rotation to the rotor main body 21 mounted on the plate 5.

The rotor main body 21 is mounted above the second mold 4 as described above, and then the first mold drive mechanism (not illustrated) is driven to move the first mold 3 downward, so that the rotor main body 21 is sandwiched between the first mold 3 and the second mold 4. At this time, the contact portions 33 of the first mold 3 are inserted into the shaft hole 211 in the rotor main body 21, and are brought into contact with the inner peripheral face of the shaft hole 211.

The rotor main body 21 is thus positioned with respect to the first mold 3 and the second mold 4 with the rotor main body 21 sandwiched between the first mold 3 and the second mold 4. In addition, the rotor main body 21 is accurately positioned with respect to the first mold 3 since the contact portions 33 are positioned while being in contact with the inner peripheral face of the shaft hole 211. As illustrated in FIG. 3, the four contact portions 33 of the first mold 3 are equidistantly arranged in the circumferential direction in the shaft hole 211 in the rotor main body 21 in the state in which the four contact portions 33 are inserted in the shaft hole 211. When the rotor main body 21 axially rotates relative to the first mold 3 in the state in which the four contact portions 33 of the first mold 3 are inserted in the shaft hole 211 in the rotor main body 21, radially opposite two of the four contact portions 33 come into contact with the projections 213, respectively. This configuration thus enables regulation of axial rotation to the rotor main body 21.

In addition, when the rotor main body 21 is sandwiched between the first mold 3 and the second mold 4, the second protrusions 37 of the first mold 3 are inserted into the second insertion portions 215 of the rotor main body 21. The first protrusions 51 inserted into the first insertion portions 214 of the rotor main body 21 and the second protrusions 37 inserted into the second insertion portions 215 of the rotor main body 21 are located axially opposite each other in the state in which the rotor main body 21 is sandwiched between the first mold 3 and the second mold 4. Therefore, the first protrusions 51 and the second protrusions 37 overlap each other as seen from the axial direction of the rotor main body 21 in the state in which the rotor main body 21 is sandwiched between the first mold 3 and the second mold 4. This configuration thus enables accurate positioning of the rotor main body 21 relative to the first mold 3 and the second mold 4.

In addition, the pillar portion 38 of the first mold 3 is inserted in the shaft hole 211 in the rotor main body 21. The pillar portion 38 has a distal end that passes through the shaft hole 211 and is in contact with the upper face of the plate 5, in the state in which the rotor main body 21 is sandwiched between the first mold 3 and the second mold 4. The pillar portion 38 supports a portion of the first mold 3 with which the shaft hole 211 in the rotor main body 21 is covered for the second mold 4. The upper face of the plate 5 with which the shaft hole 211 is covered corresponds to a bottom face of the shaft hole 211.

The resin outlets 322 of the flow paths 32 of the first mold 3 are located to respectively overlap the accommodation holes 212 as seen from the axial direction of the rotor main body 21 in the state in which the rotor main body 21 is sandwiched between the first mold 3 and the second mold 4. In the first mold 3, the number of resin outlets 322 corresponds to the number of accommodation holes 212. Since the accommodation holes 212 are arranged circumferentially, the through-holes 361 forming the resin outlets 322 are arranged circumferentially in each of the gate plates 36.

In supplying a resin into the accommodation holes 212 in the rotor main body 21, a solid resin material in the resin receive space portion 31 is molten by heat using the heater 39 of the first mold 3. When the plunger 6 is moved downward in the state in which the resin material is molten, the molten resin in the resin receive space portion 31 is flowed toward the flow paths 32. The molten resin is thus supplied into the accommodation holes 212 through the flow path main body 321 and the resin outlets 322 in sequence. The magnets 22 are accommodated in the accommodation holes 212 in advance.

In supplying the resin into the accommodation holes 212, the rotor main body 21 is heated in advance using the heater 41 of the second mold 4. The molten resin is thus flowed to lower ends in the accommodation holes 212 without being solidified at upper ends in the accommodation holes 212.

The molten resin is supplied into a clearance between each accommodation hole 212 and the magnet 22 accommodated therein. The resin in the accommodation holes 212 is solidified to fix the magnets 22 in the accommodation holes 212. The rotor manufacturing apparatus 1 thus manufactures a rotor.

After the manufacture of the rotor, the first mold drive mechanism (not illustrated) is driven to move the first mold 3 upward in order to manufacture a next rotor. In the course of the manufacture of the preceding rotor, occasionally, one of the through-holes forming the resin outlets 322 of the flow paths 32 is damaged or is clogged with the resin. In this case, only the gate plate having the through-hole that is damaged or clogged with the resin is replaced with a new one.

A rotor manufacturing apparatus 1 according to the present embodiment is a rotor manufacturing apparatus for manufacturing a rotor including a rotor main body 21 having a cylindrical shape and having a shaft hole 211 accommodating a shaft and an accommodation hole 212 accommodating a magnet 22, and the magnet 22 accommodated in the accommodation hole 212 and fixed in the accommodation hole 212 with a resin. The rotor manufacturing apparatus 1 includes: a first mold 3 including a resin receive space portion 31 receiving the resin to be supplied into the accommodation hole 212, and a flow path 32 through which the molten resin flows into the accommodation hole 212; and a second mold 4 configured to sandwich the rotor main body 21 mounted thereabove, in conjunction with the first mold 3. The flow path 32 includes: a flow path main body 321 communicating at its upstream side with the resin receive space portion 31; and a resin outlet 322 located downstream of the flow path main body 321. The first mold 3 includes: a first mold main body 34 including the resin receive space portion 31; a runner plate 35 having a flat plate shape and including the flow path main body 321, the runner plate 35 being detachable from the first mold main body 34; and a plurality of gate plates 36 each having a flat plate shape and each having a through-hole 361, the gate plates 36 being detachable from the first mold main body 34. The gate plates 36 are located opposite the first mold main body 34 in a thickness direction of the runner plate 35 with the runner plate 35 interposed between the gate plates 36 and the first mold main body 34 in a state in which the gate plates 36 are stacked on top of one another in the thickness direction. The resin outlet 322 includes the through-holes 361 in the gate plates 36, the through-holes 361 communicating with one another in the state in which the gate plates 36 are stacked on top of one another in the thickness direction.

In a case where a single plate member includes a resin flow path, it is necessary to replace the plate member with a new one if an inner peripheral face of the flow path is partially damaged or if the flow path is clogged with a resin. In contrast to this, since the rotor manufacturing apparatus 1 according to the present embodiment includes two gate plates 36, one of the gate plates having a through-hole that is partially damaged or is clogged with a resin is replaceable with a new one. In other words, it is unnecessary to replace a gate plate having a through-hole that is not partially damaged or is not clogged with a resin. This configuration thus enables reduction in manufacturing cost for a rotor.

In the rotor manufacturing apparatus 1 according to the present embodiment, the flow path main body 321 includes a through-hole in the runner plate 35. With this configuration, the through-hole forming the flow path main body 321 is easily bored in the runner plate 35.

In the rotor manufacturing apparatus 1 according to the present embodiment, the first mold 3 includes a plurality of the gate plates 36 in which the through-holes 361 are different in shape from one another. Examples of the case where the through-holes 361 are different in shape from one another may include a case where the through-holes are different in diameter from one another, a case where the through-holes are different in shape from one another as seen in plan view, and a case where the through-holes are different in sectional shape from one another as seen from a direction orthogonal to the axial direction.

In this case, the gate plates 36 are selected from among the multiple kinds of gate plates 36 in which the through-holes 361 are different in shape from one another. With this configuration, the shape of the resin outlets 322 is easily changed by replacing the gate plates 36. This configuration therefore facilitates an adjustment to a flow rate of the resin to be supplied into the accommodation hole 212.

In the rotor manufacturing apparatus 1 according to the present embodiment, the first mold 3 includes: a first gate plate 36a located nearer to the first mold main body 34; and a second gate plate 36b located nearer to the accommodation hole 212, and a diameter of a through-hole 361b in the second gate plate 36b nearer to the accommodation hole 212 is smaller than a diameter of a through-hole 361a in the first gate plate 36a nearer to the first mold main body 34.

In this case, a diameter of the resin outlet 322 through which the resin is discharged is smaller than a diameter of the resin outlet 322 through which the resin is charged. Therefore, the resin is easily injected into a small clearance between the magnet 22 and an inner face of the accommodation hole 212.

In the rotor manufacturing apparatus 1 according to the present embodiment, the first mold main body 34 includes a guide rail 7 holding the runner plate 35 and the gate plates 36 such that the runner plate 35 and the gate plates 36 are movable in a direction orthogonal to the thickness direction in a state in which the runner plate 35 and the gate plates 36 are stacked on top of each other in the thickness direction.

With this configuration, since the runner plate 35 and the gate plates 36 are movably held by the guide rail 7, the runner plate 35 and the gate plates 36 are easily replaced with new ones.

In the rotor manufacturing apparatus 1 according to the present embodiment, the guide rail 7 is detachable from the first mold main body 34.

With this configuration, the guide rail 7 is replaceable for the first mold main body 34. Therefore, the number of plates to be held by the first mold main body 34 is easily changed by replacing the guide rail 7 with a new one different in number of holdable plates from the guide rail 7, for the first mold main body 34.

In the rotor manufacturing apparatus 1 according to the present embodiment, the first mold 3 includes a plurality of the runner plates 35. With this configuration, the arrangement of the flow path main body 321 is easily adjusted by replacing some of the runner plates 35.

In the rotor manufacturing apparatus 1 according to the present embodiment, the rotor main body 21 includes a plurality of the accommodation holes 212, the first mold 3 includes a plurality of the flow paths 32 through which the resin is supplied into the accommodation holes 212, and the flow paths 32 communicate with the resin receive space portion 31 that is shared.

With this configuration, the resin receive space portion 31 of the first mold 3 is shared. Therefore, the configuration of the rotor manufacturing apparatus 1 is simplified as compared with a case where multiple resin receive space portions respectively communicate with the flow paths.

### (Other Embodiments)

The foregoing description concerns an embodiment of the present invention; however, the foregoing embodiment is merely an example for embodying the present invention.

In the foregoing embodiment, the first mold 3 includes two gate plates 36. Alternatively, the first mold may include three or more gate plates. In this case, the first mold includes a first gate plate located nearest to the first mold main body, a second gate plate located nearest to the accommodation hole, and one or more gate plates located between the first gate plate and the second gate plate. A diameter of a through-hole in the second gate plate nearer to the accommodation hole is smaller than a diameter of a through-hole in the first gate plate nearer to the first mold main body.

For example, in a case where one gate plate is located between the first gate plate and the second gate plate, the gate plate between the first gate plate and the second gate plate may have a through-hole that is equal in shape to the through-hole in the first gate plate or is equal in shape to the through-hole in the second gate plate. In this case, a diameter of the through-hole in the gate plate between the first gate plate and the second gate plate may be larger than a diameter of the through-hole in the first gate plate and smaller than a diameter of the through-hole in the second gate plate.

In the foregoing embodiment, the through-hole 361a in the first gate plate 36a is different in shape from the through-hole 361b in the second gate plate 36b. Alternatively, the two through-holes may be equal in shape to each other. In the case where the first mold includes three or more gate plates, the through-holes in the gate plates may be equal in shape to one another.

In the foregoing embodiment, the runner plate 35 is formed of a single plate member. Alternatively, the runner plate may be formed of a plurality of split plate members.

### Industrial Applicability

The present invention is applicable to a rotor manufacturing apparatus for manufacturing a rotor including a magnet fixed with a resin.

### Reference Signs List

- 1: rotor manufacturing apparatus
- 3: first mold
- 4: second mold
- 7: guide rail
- 21: rotor main body
- 22: magnet
- 31: resin receive space portion
- 32: flow path
- 34: first mold main body
- 35: runner plate
- 36: gate plate
- 211: shaft hole
- 212: accommodation hole
- 321: flow path main body
- 322: resin outlet
- 361: through-hole

## Claims

1. A rotor manufacturing apparatus (1) for manufacturing a rotor including a rotor main body (21) having a cylindrical shape and having a shaft hole (211) accommodating a shaft and an accommodation hole (212) accommodating a magnet (22), and the magnet (22) accommodated in the accommodation hole (212) and fixed in the accommodation hole (212) with a resin,
the rotor manufacturing apparatus (1) comprising:
a first mold (3) including
a resin receive space portion (31) receiving the resin to be supplied into the accommodation hole (212), and
a flow path (32) through which the molten resin flows into the accommodation hole (212); and
a second mold (4) configured to sandwich the rotor main body (21) mounted thereabove, in conjunction with the first mold (3),
wherein
the flow path (32) includes:
a flow path main body (321) communicating at its upstream side with the resin receive space portion (31); and
a resin outlet (322) located downstream of the flow path main body (321),
the first mold (3) includes:
a first mold main body (34) including the resin receive space portion (31),
a runner plate (35) having a flat plate shape and including the flow path main body (321),
the runner plate (35) being detachable from the first mold main body (34); and
a plurality of gate plates (36) each having a flat plate shape and each having a through-hole (361),
the gate plates (36) being detachable from the first mold main body (34),
the gate plates (36) are located opposite the first mold main body (34) in a thickness direction of the runner plate (35) with the runner plate (35) interposed between the gate plates (36) and the first mold main body (34) in a state in which the gate plates (36) are stacked on top of one another in the thickness direction, and
the resin outlet (322) includes the through-holes (361) in the gate plates (36), the through-holes (361) communicating with one another in the state in which the gate plates (36) are stacked on top of one another in the thickness direction,
**characterized in that**
the first mold (3) includes a plurality of the runner plates (35) which extend in a direction orthogonal to the thickness direction.

2. The rotor manufacturing apparatus (1) according to claim 1, wherein
the flow path main body (321) includes a through-hole in the runner plate (35).

3. The rotor manufacturing apparatus (1) according to claim 1 or 2, wherein
the first mold (3) includes a plurality of the gate plates (36) in which the through-holes (361) are different in shape from one another.

4. The rotor manufacturing apparatus (1) according to any one of claims 1 to 3, wherein
the first mold (3) includes:
a first gate plate (36a); and
a second gate plate (36b), the first gate plate (36a) being located between the first mold main body (34) and the second gate plate (36b), and
a diameter of a through-hole (361b) in the second gate plate (36b) is smaller than a diameter of a through-hole (361a) in the first gate plate (36a).

5. The rotor manufacturing apparatus (1) according to any one of claims 1 to 4, wherein
the first mold main body (34) includes a guide rail (7) holding the runner plate (35) and the gate plates (36) such that the runner plate (35) and the gate plates (36) are movable in a direction orthogonal to the thickness direction in a state in which the runner plate (35) and the gate plates (36) are stacked on top of each other in the thickness direction.

6. The rotor manufacturing apparatus (1) according to claim 5, wherein
the guide rail (7) is detachable from the first mold main body (34).

7. The rotor manufacturing apparatus (1) according to any one of claims 1 to 6, wherein
the first mold (3) includes a plurality of the flow paths (32) communicating with the resin receive space portion (31) that is shared.

## Patentansprüche

1. Rotorherstellungsvorrichtung (1) zum Herstellen eines Rotors, welcher aufweist: einen Rotorhauptkörper (21), der eine zylindrische Form aufweist und der ein eine Welle aufnehmendes Wellenloch (211) und ein einen Magneten (22) aufnehmendes Aufnahmeloch (212) aufweist, und den Magneten (22), der in dem Aufnahmeloch (212) aufgenommen und in dem Aufnahmeloch (212) mit einem Harz befestigt ist,
wobei die Rotorherstellungsvorrichtung (1) aufweist:
eine erste Form (3), die aufweist:
einen Harzaufnahmeraumabschnitt (31), der das Harz aufnimmt, das in das Aufnahmeloch (212) zuzuführen ist, und
einen Strömungspfad (32), durch welchen das geschmolzene Harz in das Aufnahmeloch (212) fließt; und
eine zweite Form (4), die derart konfiguriert ist, dass sie den darüber montierten Rotorhauptkörper (21) zusammen mit der ersten Form (3) sandwichartig aufnimmt,
wobei der Strömungspfad (32) aufweist:
einen Strömungspfadhauptkörper (321), der auf seiner stromaufwärtigen Seite mit dem Harzaufnahmeraumabschnitt (31) kommuniziert; und
einen Harzauslass (322), der sich stromabwärts des Strömungspfadhauptkörpers (321) befindet,
wobei die erste Form (3) aufweist:
einen ersten Formhauptkörper (34), der den Harzaufnahme raumabschnitt (31) aufweist,
eine Laufplatte (35), die eine ebene Plattenform aufweist und den Strömungspfadhauptkörper (321) aufweist, wobei die Laufplatte (35) von dem ersten Formhauptkörper (34) abnehmbar ist; und
mehrere Gatterplatten (36), die jeweils eine ebene Plattenform aufweisen und jeweils ein Durchgangsloch (361) aufweisen, wobei die Gatterplatten (36) von dem ersten Formhauptkörper (34) abnehmbar sind,
wobei die Gatterplatten (36) gegenüberliegend zu dem ersten Formhauptkörper (34) in einer Dickenrichtung der Laufplatte (35) angeordnet ist, wobei die Laufplatte (35) zwischen den Gatterplatten (36) und dem ersten Formhauptkörper (34) in einem Zustand angeordnet ist, in dem die Gatterplatten (36) aufeinander in der Dickenrichtung gestapelt sind, und
wobei der Harzauslass (322) die Durchgangslöcher (361) in den Gatterplatten (36) aufweist, wobei die Durchgangslöcher (361) miteinander in dem Zustand kommunizieren, in dem die Gatterplatten (36) aufeinander in der Dickenrichtung gestapelt sind,
**dadurch gekennzeichnet, dass** die erste Form (3) mehrere der Laufplatten (35) aufweist, die sich in einer zu der Dickenrichtung orthogonalen Richtung erstrecken.

2. Rotorherstellungsvorrichtung (1) nach Anspruch 1, wobei der Strömungspfadhauptkörper (321) ein Durchgangsloch in der Laufplatte (35) aufweist.

3. Rotorherstellungsvorrichtung (1) nach Anspruch 1 oder 2, wobei die erste Form (3) mehrere der Gatterplatten (36) aufweist, in welchen die Durchgangslöcher (361) sich in ihrer Form voneinander unterscheiden.

4. Rotorherstellungsvorrichtung (1) nach einem der Ansprüche 1 bis 3, wobei:
die erste Form (3) aufweist:
eine erste Gatterplatte (36a); und
eine zweite Gatterplatte (36b), wobei sich die erste Gatterplatte (36a) zwischen dem ersten Formhauptkörper (34) und der zweiten Gatterplatte (36b) befindet, und
ein Durchmesser eines Durchgangslochs (361b) in der zweiten Gatterplatte (36b) kleiner ist als ein Durchmesser eines Durchgangslochs (361a) in der ersten Gatterplatte (36a).

5. Rotorherstellungsvorrichtung (1) nach einem der Ansprüche 1 bis 4, wobei der erste Formhauptkörper (34) eine Führungsschiene (7) aufweist, die die Laufplatte (35) und die Gatterplatten (36) derart hält, dass die Laufplatte (35) und die Gatterplatten (36) in einer zu der Dickenrichtung orthogonalen Richtung in einem Zustand bewegbar sind, in dem die Laufplatte (35) und die Gatterplatten (36) in der Dickenrichtung aufeinander gestapelt sind.

6. Rotorherstellungsvorrichtung (1) nach Anspruch 5, wobei die Führungsschiene (7) von dem ersten Formhauptkörper (34) abnehmbar ist.

7. Rotorherstellungsvorrichtung (1) nach einem der Ansprüche 1 bis 6, wobei die erste Form (3) mehrere der Strömungspfade (32) aufweist, die mit dem Harzaufnahmeraumabschnitt (31) kommunizieren, der gemeinsam genutzt wird.

## Revendications

1. Appareil de fabrication de rotor (1) pour fabriquer un rotor incluant un corps principal de rotor (21) présentant une forme cylindrique et présentant un trou d'arbre (211) logeant un arbre et un trou de logement (212) logeant un aimant (22), et l'aimant (22) étant reçu dans le trou de logement (212) et fixé dans le trou de logement (212) à l'aide d'une résine,
l'appareil de fabrication de rotor (1), comprenant :
un premier moule (3) comprenant
une partie d'espace de réception de résine (31) recevant la résine à alimenter dans le trou de logement (212), et
un trajet d'écoulement (32) à travers lequel la résine fondue s'écoule dans le trou de logement (212) ; et
un second moule (4) configuré pour enserrer le corps principal de rotor (21) monté au-dessus de celui-ci, conjointement avec le premier moule (3),
dans lequel
le trajet d'écoulement (32) comprend :
un corps principal de trajet d'écoulement (321) communiquant au niveau de son côté amont avec la partie d'espace de réception de résine (31) ; et
une sortie de résine (322) située en aval du corps principal de trajet d'écoulement (321),
le premier moule (3) comprend :
un corps principal de premier moule (34) incluant la partie d'espace de réception de résine (31),
une plaque de canal de coulée(35) présentant une forme de plaque plate et incluant le corps principal de trajet d'écoulement (321),
la plaque de canal de coulée (35) pouvant être détachée du corps principal de premier moule (34) ; et
une pluralité de plaques de grille (36) présentant chacune une forme de plaque plate et présentant chacune un trou traversant (361),
les plaques de grille (36) pouvant être détachées du corps principal de premier moule (34),
les plaques de grille (36) sont situées à l'opposé du corps principal de premier moule (34) dans une direction d'épaisseur de la plaque de canal de coulée (35), la plaque de canal de coulée (35) étant interposée entre les plaques de grille (36) et le corps principal de premier moule (34) dans un état dans lequel les plaques de grille (36) sont empilées les unes sur les autres dans la direction d'épaisseur, et
la sortie de résine (322) comprend les trous traversants (361) dans les plaques de grille (36), les trous traversants (361) communiquant les uns avec les autres dans l'état dans lequel les plaques de grille (36) sont empilées les unes sur les autres dans la direction d'épaisseur, **caractérisé en ce que**
le premier moule (3) inclut une pluralité des plaques de canal de coulée (35) qui s'étendent dans une direction orthogonale à la direction de l'épaisseur.

2. Appareil de fabrication de rotor (1) selon la revendication 1, dans lequel
le corps principal de trajet d'écoulement (321) inclut un trou traversant dans la plaque de canal de coulée (35).

3. Appareil de fabrication de rotor (1) selon la revendication 1 ou 2, dans lequel
le premier moule (3) inclut une pluralité de plaques de grille (36) dans lesquelles les trous traversants (361) sont d'une forme différente les uns par rapport aux autres.

4. Appareil de fabrication de rotor (1) selon l'une quelconque des revendications 1 à 3 ; dans lequel
le premier moule (3) comprend :
une première plaque de grille (36a) ; et
une seconde plaque de grille (36b), la première plaque de grille (36a) étant située entre le corps principal de premier moule (34) et la seconde plaque de grille (36b), et
un diamètre d'un trou traversant (361b) dans la seconde plaque de grille (36b) est inférieur à un diamètre d'un trou traversant (361a) dans la première plaque de grille (36a).

5. Appareil de fabrication de rotor (1) selon l'une quelconque des revendications 1 à 4 ; dans lequel
le corps principal de premier moule (34) comprend un rail de guidage (7) maintenant la plaque de canal de coulée (35) et les plaques de grille (36) de sorte que la plaque de canal de coulée (35) et les plaques de grille (36) soient mobiles dans une direction orthogonale à la direction d'épaisseur dans un état dans lequel la plaque de canal de coulée (35) et les plaques de grille (36) sont empilées les unes sur les autres dans la direction d'épaisseur.

6. Appareil de fabrication de rotor (1) selon la revendication 5, dans lequel
le rail de guidage (7) peut être détaché du corps principal de premier moule (34).

7. Appareil de fabrication de rotor (1) selon l'une quelconque des revendications 1 à 6 ; dans lequel
le premier moule (3) comprend une pluralité de trajets d'écoulement (32) communiquant avec la partie d'espace de réception de résine (31) qui est partagée.
